# EUROPÄISCHE PATENTSCHRIFT

(11) **EP 4 370 377 B1**
(45) Veröffentlichungstag und Bekanntmachung des Hinweises auf die Patenterteilung: **30.10.2024**
(21) Anmeldenummer: 23735973.2
(22) Anmeldetag: 21.06.2023
(51) Int. Cl.: B60Q 1/34, G08G 1/16, G06V 20/58, B60Q 1/40

(54) **VERFAHREN ZUM AUTOMATISCHEN ANSTEUERN EINES FAHRTRICHTUNGSANZEIGERS UND FAHRZEUG**
METHOD FOR AUTOMATICALLY ACTUATING A DIRECTION INDICATOR AND VEHICLE
PROCÉDÉ D'ACTIONNEMENT AUTOMATIQUE D'UN INDICATEUR DE DIRECTION ET VÉHICULE

(30) Priorität: 05.07.2022 DE 102022002451
(43) Veröffentlichungstag der Anmeldung: 22.05.2024
(73) Patentinhaber: Mercedes-Benz Group AG, 70372 Stuttgart (DE)
(72) Erfinder: ENGEL, Michael, 70374 Stuttgart (DE)
(74) Vertreter: Novagraaf Group
(86) Internationale Anmeldenummer: PCT/EP2023/066885
(87) Internationale Veröffentlichungsnummer: WO 2024/008459

(56) Entgegenhaltungen:
- DE-A1- 10 251 357
- DE-A1- 102006 020 631
- DE-A1- 102015 202 826

## Beschreibung

Die Erfindung betrifft ein Verfahren zum automatischen Ansteuern eines Fahrtrichtungsanzeigers eines Ego-Fahrzeugs nach der im Oberbegriff von Anspruch 1 näher definierten Art sowie ein Fahrzeug zur Durchführung des Verfahrens.

Im Straßenverkehr kommt es oftmals vor, dass beim Befahren einer abknickenden Vorfahrtsstraße falsch geblinkt wird. Befindet sich ein Fahrzeug auf einer entsprechenden Vorfahrtsstraße und möchte dieser weiterfolgen, so muss an der jeweiligen Kreuzung zum Folgen der abknickenden Vorfahrtsstraße links oder rechts geblinkt werden. Wird der Blinker nicht gesetzt, so signalisiert dies eigentlich, dass das Fahrzeug an der Kreuzung geradeaus fahren wird.

An einer entsprechenden Kreuzung mit abbiegender Vorfahrt kann es somit vermehrt zu Unfällen kommen. Vergisst nämlich eine fahrzeugführende Person eines Ego-Fahrzeugs beim Folgen einer nach links abknickenden Vorfahrtsstraße einen Blinker zu setzen, so könnte ein entgegenkommendes Fremdfahrzeug daraus schließen, dass das Ego-Fahrzeug geradeaus fahren wird. In diesem Falle könnte, wenn eine fahrzeugführende Person des Fremdfahrzeug beabsichtigt geradeaus zu fahren, diese bereits anfahren. Da das Ego-Fahrzeug jedoch der abknickenden Vorfahrtsstraße nach links folgt, könnte es dann zu einem Zusammenstoß zwischen Ego-Fahrzeug und Fremdfahrzeug kommen.

Zur Erhöhung der Sicherheit im Straßenverkehr existiert somit das Erfordernis Verfahren und Vorrichtungen anzugeben, mit dessen Hilfe beim Folgen einer abknickenden Vorfahrtsstraße ein Blinker automatisch aktiviert werden kann, sollte dies durch die fahrzeugführende Person vergessen worden sein.

Aus der DE 10 2004 030 951 A1 ist es bekannt einen Blinker eines Fahrzeugs in Abhängigkeit einer vom Fahrzeug befahrenen Navigationsroute automatisch zu aktivieren. Dies impliziert die automatische Aktivierung des Blinkers beim Folgen einer abknickenden Vorfahrtsstraße. So können entsprechende Vorfahrtsregeln in digitalem Kartenmaterial hinterlegt sein, wobei der Blinker aktiviert wird, wenn die Navigationsroute der abknickenden Vorfahrtsstraße folgt.

Ein ähnliches Verfahren ist auch aus der DE 10 2009 047 436 A1 bekannt, bei dem der Blinker eines Fahrzeugs durch Überwachen einer Fahrzeugposition und Abgleich der Fahrzeugposition mit digitalem Kartenmaterial aktivierbar oder deaktivierbar ist. So ist ein automatisches Aktivieren oder Deaktivieren des Blinkers möglich, ohne dass das Folgen des Fahrzeugs einer Navigationsroute überwacht werden muss.

Zudem ist aus der DE 10 2006 020 631 A1 eine Steuereinrichtung zur Steuerung eines Fahrtrichtungsanzeigers eines Kraftfahrzeugs bekannt. Ein von der Steuereinrichtung ausgeführtes Verfahren zum Ansteuern des Fahrtrichtungsanzeigers sieht vor, dass der Fahrtrichtungsanzeiger in Abhängigkeit einer vorgegebenen Navigationsroute und gleichzeitiger Berücksichtigung von mit einer Kamera und einem Radarsystem erzeugter Sensordaten aktiviert wird. Unter Berücksichtigung der erwähnten Größen kann der Fahrtrichtungsanzeiger beispielsweise automatisch beim Durchführen eines Spurwechsels, beim Befahren einer Autobahnabfahrt oder beim Erkennen des Aufenthalts des Fahrzeugs auf einer Abbiegespur aktiviert werden. Lässt die jeweilige Verkehrssituation ein sicheres Durchführen eines jeweiligen Verkehrsmanövers nicht zu, beispielsweise weil sich ein hinter dem Fahrzeug folgender Verkehrsteilnehmer mit deutlich höherer Geschwindigkeit auf das Fahrzeug zubewegt, so kann auch das automatische Betätigen des Fahrtrichtungsanzeigers unterlassen werden.

Ferner offenbart die DE 10 2013 225 138 A1 eine automatische Blinkerassistenz. Es ist eine Steuereinheit für ein Fahrzeug vorgesehen, die einen für ein bestimmtes Fahrmanöver aktivierten Blinker nach Beenden des Fahrmanövers automatisch deaktiviert.

Zudem offenbart die DE 197 22 186 A1 ein Verfahren zum Erkennen des Zeitpunkts für das automatische Betätigen eines Fahrtrichtungsanzeigers in Abhängigkeit eines von einem Fahrzeug zurückgelegten Fahrwegs, wobei der Fahrweg mittels eines Navigationssystems bestimmt wird.

Eine solche navigationssystemgesteuerte Fahrtrichtungsanzeige ist auch aus der DE 11 2012 001 775 T5 bekannt. Dabei wird ein Blinker automatisch betätigt, wenn sich das Fahrzeug in einer in einer digitalen Straßenkarte hinterlegten Abbiegezone befindet.

Der vorliegenden Erfindung liegt die Aufgabe zugrunde ein verbessertes Verfahren zum automatischen Ansteuern eines Fahrtrichtungsanzeigers eines Ego-Fahrzeugs anzugeben, durch dessen Anwendung das Risiko von Unfällen im Bereich einer Kreuzung mit abknickender Vorfahrt gesenkt wird.

Erfindungsgemäß wird diese Aufgabe durch ein Verfahren zum automatischen Ansteuern eines Fahrtrichtungsanzeigers eines Ego-Fahrzeugs mit den Merkmalen des Anspruchs 1 sowie ein Fahrzeug zur Durchführung des Verfahrens nach Anspruch 5 gelöst. Vorteilhafte Ausgestaltungen und Weiterbildungen ergeben sich aus den hiervon abhängigen Ansprüchen.

Bei einem Verfahren zum automatischen Ansteuern eines Fahrtrichtungsanzeigers eines Ego-Fahrzeugs im Rechtsverkehr der eingangs genannten Art, wobei das Ego-Fahrzeug mittels einer Umfeldsensorik sein Umfeld überwacht sowie mittels einer Navigationseinheit seinen aktuellen Aufenthaltsort bestimmt und von der Umfeldsensorik erzeugte Sensordaten sowie der von der Navigationseinheit bestimmte Aufenthaltsort von einer Recheneinheit verarbeitet werden, woraufhin die Recheneinheit den Fahrtrichtungsanzeiger in Abhängigkeit aus der Verarbeitung der Sensordaten gewonnener Informationen und eines Abgleichs des Aufenthaltsorts mit einer digitalen Straßenkarte ansteuert, wobei ferner die Recheneinheit dazu ausgebildet ist, eine Annäherung des Ego-Fahrzeugs an eine Kreuzung mit einer abknickenden Vorfahrt zu erkennen und den Fahrtrichtungsanzeiger beim Annähern an die Kreuzung automatisch zu aktivieren, wenn eine von der Navigationseinheit genutzte Navigationsroute das Durchführen eines Abbiegevorgangs an der Kreuzung vorsieht, überprüft erfindungsgemäß die Recheneinheit, wenn die Recheneinheit einen Aufenthalt des Ego-Fahrzeugs auf einem Vorfahrtspfad erkennt, die Sensordaten dahingehend, ob bei einer nach rechts abknickenden Vorfahrt in einem aus Sicht des Ego-Fahrzeugs linken in die Kreuzung einmündenden Straßenzug oder in einem dem Ego-Fahrzeug gegenüberliegenden vorwärtigen Straßenzug ein Fremdfahrzeug erkennbar ist, wenn die Navigationsroute des Ego-Fahrzeugs der abknickenden Vorfahrtsstraße nach rechts folgt; oder bei einer nach links abknickenden Vorfahrt in einem aus Sicht des Ego-Fahrzeugs rechten in die Kreuzung einmündenden Straßenzug ein Fremdfahrzeug erkennbar ist, wenn die Navigationsroute des Ego-Fahrzeugs der abknickenden Vorfahrtstraße nach links folgt; oder bei einer nach links abknickenden Vorfahrt in einem aus Sicht des Ego-Fahrzeugs rechten in die Kreuzung einmündenden Straßenzug oder im vorwärtigen Straßenzug ein Fremdfahrzeug erkennbar ist, wenn die Navigationsroute des Ego-Fahrzeugs von der abknickenden Vorfahrtstraße nach rechts herunter führt; woraufhin die Recheneinheit den Fahrtrichtungsanzeiger ansteuert, um den Fahrtrichtungsanzeiger zu aktivieren, wenn die Recheneinheit bei der Prüfung der Sensordaten kein Fremdfahrzeug im jeweiligen Straßenzug erkennt, oder eine Aktivierung des Fahrtrichtungsanzeigers zu verhindern, wenn die Recheneinheit bei der Prüfung der Sensordaten wenigstens ein Fremdfahrzeug im jeweiligen Straßenzug erkennt.

Durch Anwendung des erfindungsgemäßen Verfahrens lässt sich eine kritische Verkehrssituation vermeiden, in der ein Unfall durch das falsche Setzen eines Fahrtrichtungsanzeigers wie eines Blinkers im Bereich einer Kreuzung mit abknickender Vorfahrt droht. So ist es mit Hilfe eines aus dem Stand der Technik bekannten Fahrerassistenzsystems bzw. einem entsprechenden Verfahren zum automatischen Ansteuern des Fahrtrichtungsanzeigers möglich, den Fahrtrichtungsanzeiger des Ego-Fahrzeugs zum Folgen der Navigationsroute entlang der abknickenden Vorfahrtsstraße automatisch zu aktivieren. Die Anmelderin hat jedoch erkannt, dass für bestimmte Verkehrssituationen durch das automatische Aktivieren des Fahrtrichtungsanzeigers ein Unfall droht. Dies wird mit dem erfindungsgemäßen Verfahren verhindert.

Es besteht die Möglichkeit, dass die fahrzeugführende Person des Ego-Fahrzeugs der von der Navigationseinheit genutzten Navigationsroute nicht folgen möchte, beispielsweise weil die fahrzeugführende Person Ortskenntnis hat und das Abweichen von der Navigationsroute eine Abkürzung darstellt oder beispielsweise weil ein Zwischenstopp abseits der Navigationsroute eingelegt werden soll. Dabei ist es unerheblich, ob die Navigationsroute der abknickenden Vorfahrtsstraße oder dem der abknickenden Vorfahrtsstraße gegenüberliegenden Zweig der Kreuzung folgt. In jedem Falle verläuft die Navigationsroute an der Kreuzung jedoch entweder nach links oder nach rechts, also in den linken Straßenzug oder den rechten Straßenzug. Möchte dann ein Fahrzeug aus dem der abknickenden Vorfahrtsstraße gegenüberliegenden Straßenzug, also bei einer nach rechts abknickenden Vorfahrtsstraße aus dem linken Straßenzug und bei einer nach links abknickenden Vorfahrtsstraße aus dem rechten Straßenzug in die Kreuzung einfahren, so droht dann ein Unfall, wenn das Ego-Fahrzeug in Abhängigkeit der Navigationsroute den Fahrtrichtungsanzeiger automatisch aktiviert. Es kann auch ein Unfall bei einem dem Ego-Fahrzeug entgegenkommenden Fahrzeug drohen. Dies wird im Folgenden für das Beispiel einer nach links abknickenden Vorfahrtsstraße und einem aus dem rechten Straßenzug in die Kreuzung einfahrenden Fremdfahrzeug verdeutlicht und gilt entsprechend für die übrigen Anwendungsfälle.

Bei einem aus dem Stand der Technik bekannten Verfahren zum automatischen Betätigen des Fahrtrichtungsanzeigers in Abhängigkeit der Navigationsroute würde der Fahrtrichtungsanzeiger zum Anzeigen eines Abbiegevorgangs nach links aktiviert, da die Recheneinheit davon ausgehen würde, dass das Ego-Fahrzeug nach links abbiegen wird, um der Navigationsroute zu folgen. Alternativ könnte die Navigationsroute auch in den rechten Straßenzug einmünden, das Ego-Fahrzeug somit rechts blinken. In beiden Fällen könnte eine fahrzeugführende Person des Fremdfahrzeugs durch das Betätigen des Fahrtrichtungsanzeigers des Ego-Fahrzeugs dazu veranlasst werden bereits anzufahren, auch wenn das Fremdfahrzeug Vorfahrt gewähren muss, da bei einem durch das Ego-Fahrzeug durchgeführten Abbiegevorgang nach links kein Unfall droht, wenn das Fremdfahrzeug aus seiner Sicht nach rechts abbiegen möchte, bzw. wenn das Ego-Fahrzeug aus seiner Sicht nach rechts abbiegen würde und das Fremdfahrzeug aus seiner Sicht geradeaus oder nach rechts abbiegen möchte. Entscheidet sich die fahrzeugführende Person des Ego-Fahrzeugs jedoch dazu stattdessen geradeaus über die Kreuzung zu fahren, so droht ein Unfall mit dem anfahrenden bzw. in die Kreuzung eigefahrenen Fremdfahrzeug.

Durch Anwendung des erfindungsgemäßen Verfahrens prüft die Recheneinheit jedoch, ob Fremdfahrzeuge im jeweiligen der abknickenden Vorfahrtsstraße gegenüberliegenden Straßenzug der Kreuzung auffindbar sind und unterlässt in diesem Falle das automatische Betätigen des Fahrtrichtungsanzeigers. Sollte dann die fahrzeugführende Person des Ego-Fahrzeugs über die Kreuzung geradeaus fahren und von der Navigationsroute abweichen, so wird das Unfallpotenzial abgesenkt, die die fahrzeugführende Person des Fremdfahrzeugs durch nicht Betätigen des Fahrtrichtungsanzeigers des Ego-Fahrzeugs erkennen würden, dass das Ego-Fahrzeug geradeaus fährt. Somit würde die fahrzeugführende Person des Fremdfahrzeugs auch nicht anfahren.

Befindet sich im jeweiligen Straßenzug kein Fremdfahrzeug so kann hingegen der Fahrtrichtungsanzeiger des Ego-Fahrzeugs gefahrlos automatisch aktiviert werden.

Als Umfeldsensorik kann das Ego-Fahrzeug verschiedenste Umgebungssensoren nutzen. Hierzu zählen Mono- oder Stereokameras, Radarsensoren, Laserscanner wie ein LIDAR, Ultraschallsensoren und dergleichen. Mit Hilfe solcher Systeme lässt sich das Umfeld des Fahrzeugs umfangreich überwachen. So lassen sich zuverlässig andere Verkehrsteilnehmer wie besagtes Fremdfahrzeug detektieren.

Die mittels der Umfeldsensorik erzeugten Sensordaten lassen sich auch zur Plausibilisierung einer entsprechenden Verkehrssituation nutzen. So können beispielsweise mit Hilfe bewährter Bilderkennungsalgorithmen Verkehrszeichen in Kamerabildern erkannt werden, welche auf das Eintreffen des Ego-Fahrzeugs an einer Kreuzung mit abknickender Vorfahrt schließen lassen. Die Recheneinheit kann dann gegebenenfalls auch aus dem Verkehrszeichen herauslesen, auf welchem Straßenzug der Kreuzung, also einem Straßenzug der Vorfahrtsstraße oder einem Straßenzug welcher Vorrang gewähren muss, befindet.

Bei der Navigationseinheit kann es sich um ein fahrzeugintegriertes oder auch ein mobiles Navigationssystem handeln. Eine Positionsbestimmung des Ego-Fahrzeugs ist mit Hilfe globaler Navigationssatelittensysteme wie GPS, Galileo, Beidou oder dergleichen möglich. Die Navigationseinheit kann einen Datenspeicher mit besagten digitalen Straßenkarten umfassen. Vorfahrtsregeln und entsprechend abknickende Vorfahrtsstraßen können in der digitalen Straßenkarte eingespeichert sein.

Eine vorteilhafte Weiterbildung des Verfahrens sieht vor, dass ein durch die Recheneinheit ausgegebenes Steuersignal zum Ansteuern des Fahrtrichtungsanzeigers durch das manuelle Betätigen eines Fahrtrichtungsanzeiger-Bedienelements überschrieben wird. Bei dem Fahrtrichtungsanzeiger-Bedienelement kann es sich beispielsweise um einen Blinkerhebel handeln. In einer Situation, in der ein Fremdfahrzeug im jeweiligen Straßenzug erkannt wird, wird gemäß der obigen Ausführung der Fahrtrichtungsanzeiger des Ego-Fahrzeugs nicht automatisch aktiviert.

Möchte die fahrzeugführende Person des Ego-Fahrzeugs jedoch tatsächlich abbiegen, beispielsweise, um der Navigationsroute doch zu folgen, so lässt sich der Fahrtrichtungsanzeiger des Ego-Fahrzeugs manuell aktivieren. So lässt sich vermeiden, dass eine entsprechende Fahrtrichtungsindikation ausbleibt, obwohl ein Abbiegevorgang mit dem Ego-Fahrzeug durchgeführt wird. Handelt es sich um eine nach links abknickende Vorfahrtsstraße und verläuft die Navigationsroute ebenfalls nach links, so kann die fahrzeugführende Person des Ego-Fahrzeugs auch nach rechts blinken, wenn sie beabsichtigt rechts abzubiegen, wodurch ein sich im rechten Straßenzug befindliches Fremdfahrzeug erkennen kann, dass es gefahrlos anfahren kann. Die entsprechenden Verkehrssituationen lassen sich analog auf die jeweils gespiegelte Vorfahrtssituation übertragen.

Entsprechend einer weiteren vorteilhaften Ausgestaltung des Verfahrens steuert die Recheneinheit den Fahrtrichtungsanzeiger beim Überschreiten des Mittelpunkts der Kreuzung an, um:
- einen inaktiven Fahrtrichtungsanzeiger zu aktivieren, wenn die Recheneinheit einen Abbiegevorgang des Ego-Fahrzeugs von der Kreuzung erkennt; oder
- einen aktiven Fahrtrichtungsanzeiger zu deaktivieren, wenn die Recheneinheit eine Geradeausfahrt des Ego-Fahrzeugs durch die Kreuzung erkennt.

Nach dem Überschreiten des Mittelpunkts der Kreuzung steht fest, in welchen Straßenzug das Ego-Fahrzeug einfährt. Das Überschreiten des Mittelpunkts der Kreuzung kann die Recheneinheit beispielsweise durch Auswerten des Aufenthaltsorts des Ego-Fahrzeugs, also der Fahrzeugposition, beispielsweise ermittelt mit Hilfe der Navigationseinheit, erkennen. Auch hierzu können ergänzend oder alternativ die mittels der Umfeldsensorik erzeugten Sensordaten ausgewertet werden. So kann die Recheneinheit beispielsweise auch aus Kamerabildern erkennen, ob der Mittelpunkt der Kreuzung überschritten wurde. Analog kann die Recheneinheit den Abbiegevorgang bzw. die Geradeausfahrt erkennen. Hierzu können auch dynamische Fahrdaten herangezogen werden, wie ein Lenkwinkel, laterale und/oder longitudinale Beschleunigungswerte, eine Fortbewegungsgeschwindigkeit und dergleichen. Entsprechende Daten können von einem Fahrerassistenzsystem, beispielsweise einem ESP, an die Recheneinheit übermittelt werden.

Dies verbessert den Komfort für die fahrzeugführende Person des Ego-Fahrzeugs noch weiter, da nach Überschreiten des Mittelpunkts der Kreuzung der Fahrtrichtungsanzeiger des Ego-Fahrzeugs automatisch entsprechend des tatsächlich durchgeführten Verkehrsmanövers betätigt werden kann. Wurde also beispielsweise auf die automatische Aktivierung des Fahrtrichtungsanzeigers verzichtet, da ein Fremdfahrzeug im entsprechenden Straßenzug erkannt wurde, so kann nach Überschreiten des Mittelpunkts der Kreuzung der Fahrtrichtungsanzeiger dennoch automatisch aktiviert werden.

Befindet sich im entsprechenden Straßenzug hingegen kein Fremdfahrzeug, so wird der Fahrtrichtungsanzeiger zum Folgen der Navigationsroute ohnehin automatisch betätigt. Fährt das Ego-Fahrzeug geradeaus über die Kreuzung, so würde die Fahrtrichtung falsch angezeigt werden. In einem solchen Fall lässt sich die Geradeausfahrt erkennen und der fälschlicherweise aktivierte Fahrtrichtungsanzeiger wieder ausschalten.

Eine weitere vorteilhafte Ausgestaltung des Verfahrens sieht ferner vor, dass die Recheneinheit mit Hilfe wenigstens eines Fahrzeuginnenraumsensors eine Blickrichtung der fahrzeugführenden Person des Ego-Fahrzeugs erfasst und die Recheneinheit den Fahrtrichtungsanzeiger ansteuert, wobei ein vormalig durch die Recheneinheit ausgegebenes Steuersignal überschrieben wird, um:
- einen inaktiven Fahrtrichtungsanzeiger zu aktivieren, wenn die Recheneinheit erkennt, dass die Blickrichtung beim Einfahren des Ego-Fahrzeugs in die Kreuzung auf den linken Straßenzug oder auf den rechten Straßenzug gerichtet ist; oder
- einen aktiven Fahrtrichtungsanzeiger zu deaktivieren, wenn die Recheneinheit erkennt, dass die Blickrichtung beim Einfahren des Ego-Fahrzeugs in die Kreuzung geradeaus, auf einen aus Sicht des Ego-Fahrzeugs vorwärtigen Straßenzug gerichtet ist.

Auch hierdurch lässt sich der Komfort für die fahrzeugführende Person des Ego-Fahrzeugs steigern. So ist eine automatische und regelkonforme Aktivierung bzw. Deaktivierung des Fahrtrichtungsanzeigers in Abhängigkeit verschiedenster Verkehrssituationen möglich. Die fahrzeugführende Person des Ego-Fahrzeugs muss dann entsprechend das Fahrtrichtungsanzeiger-Bedienelement, beispielsweise besagten Blinkerhebel, zum Korrigieren einer falsch indizierten Fahrtrichtung nicht mehr manuell betätigen. So erkennt die Recheneinheit die von der fahrzeugführenden Person geplante Fahrtrajektorie aus der Blickrichtung und aktiviert entsprechend den Fahrtrichtungsanzeiger bzw. deaktiviert ihn.

Das Überschreiben des ursprünglich von der Recheneinheit ausgegebenen Steuersignals zum Ansteuern des Fahrtrichtungsanzeigers in Abhängigkeit der manuellen Betätigung des Fahrtrichtungsanzeiger-Bedienelements, des Überschreitens des Mittelpunkts der Kreuzung und durch die Überwachung der Blickrichtung der fahrzeugführenden Person kann in beliebiger Reihenfolge und Art und Weise miteinander kombiniert werden. Beispielsweise kann die manuelle Betätigung des Fahrtrichtungsanzeiger-Bedienelements die automatische Ansteuerung des Fahrtrichtungsanzeigers beim Überschreiten des Mittelpunkts der Kreuzung sowie in Abhängigkeit der erfassten Blickrichtung überschreiben. Je nach Ausgestaltung kann auch das Überschreiten des Mittelpunkts der Kreuzung bzw. das Ansteuern in Abhängigkeit der Blickrichtung der fahrzeugführenden Person als dominante Ansteuerungsmöglichkeit verwendet werden.

Bei einem Fahrzeug mit einem Fahrtrichtungsanzeiger, einer Umfeldsensorik, einer Navigationseinheit und einer Recheneinheit sind erfindungsgemäß der Fahrtrichtungsanzeiger, die Umfeldsensorik, die Navigationseinheit und die Recheneinheit zur Durchführung eines im vorigen beschriebenen Verfahrens eingerichtet. Bei dem Fahrzeug kann es sich um ein beliebiges Fahrzeug wie einen Pkw, Lkw, Transporter, Bus oder dergleichen handeln. Der Fahrtrichtungsanzeiger ist insbesondere als Blinker ausgeführt. Der Fahrtrichtungsanzeiger wird im Singular bezeichnet, meint jedoch eine geeignete Anzahl von Fahrtrichtungsindikationsmitteln. So kann das Fahrzeug beispielsweise am Fahrzeugheck und an der Fahrzeugfront sowie auch seitlich, beispielsweise integriert in die Außenspiegel, Blinker aufweisen. Durch das Betätigen von an der linken Fahrzeughälfte installierten Blinkern lässt sich ein geplanter Abbiegevorgang in Fahrtrichtung des Ego-Fahrzeugs voraus nach links anzeigen und entsprechend mittels der in der rechten Fahrzeughälfte angeordneten Blinker ein Abbiegevorgang nach rechts.

Zur Ausbildung der Umfeldsensorik kann das Fahrzeug diverse Monokameras, Stereokameras, Radarsensoren, Ultraschallsensoren und/oder auch Laserscanner wie ein oder mehrere LIDARe umfassen. Die Navigationseinheit kann insbesondere als fest in das Fahrzeug integriertes Navigationssystem ausgeführt sein. Die Recheneinheit analysiert die von der Umfeldsensorik bereitgestellten Sensordaten und wertet von der Navigationseinheit übermittelte Informationen, wie eine geplante Navigationsroute und einen tatsächlichen Aufenthaltsort des Ego-Fahrzeugs, insbesondere unter Berücksichtigung eines Abgleichs mit einer digitalen Straßenkarte, aus. In Abhängigkeit der erwähnten Größen steuert dann die Recheneinheit den Fahrtrichtungsanzeiger an.

Bei dem Fremdfahrzeug kann es sich analog um einen Pkw, Lkw, Transporter, Bus aber auch um ein Kleinstahrzeug wie einen E-Scooter, ein Fahrrad, ein Pedelec oder auch ein Motorrad oder dergleichen handeln.

Weitere vorteilhafte Ausgestaltungen des erfindungsgemäßen Verfahrens zum automatischen Ansteuern des Fahrtrichtungsanzeigers des Ego-Fahrzeugs ergeben sich auch aus den Ausführungsbeispielen, welche nachfolgend unter Bezugnahme auf die Figuren näher beschrieben werden.

Dabei zeigen:
- Fig. 1: eine schematische Draufsicht auf eine Kreuzung mit abknickender Vorfahrt, bei der ein Ego-Fahrzeug in zwei unterschiedlichen Verkehrssituationen ein regelkonformes Fahrverhalten zeigt;
- Fig. 2: eine schematische Draufsicht auf eine Kreuzung mit nach links abknickender Vorfahrt in zwei Verkehrssituationen mit erhöhtem Unfallpotenzial;
- Fig. 3: eine schematische Draufsicht auf eine Kreuzung mit nach rechts abknickender Vorfahrt in zwei Verkehrssituationen, wobei eine der Verkehrssituationen ein erhöhtes Unfallpotenzial birgt;
- Fig. 4: eine schematische Draufsicht auf eine Kreuzung mit nach rechts abknickender Vorfahrt in einer dritten, ebenfalls sicheren Verkehrssituation; und
- Fig. 5: ein Ablaufdiagramm eines erfindungsgemäßen Verfahrens.

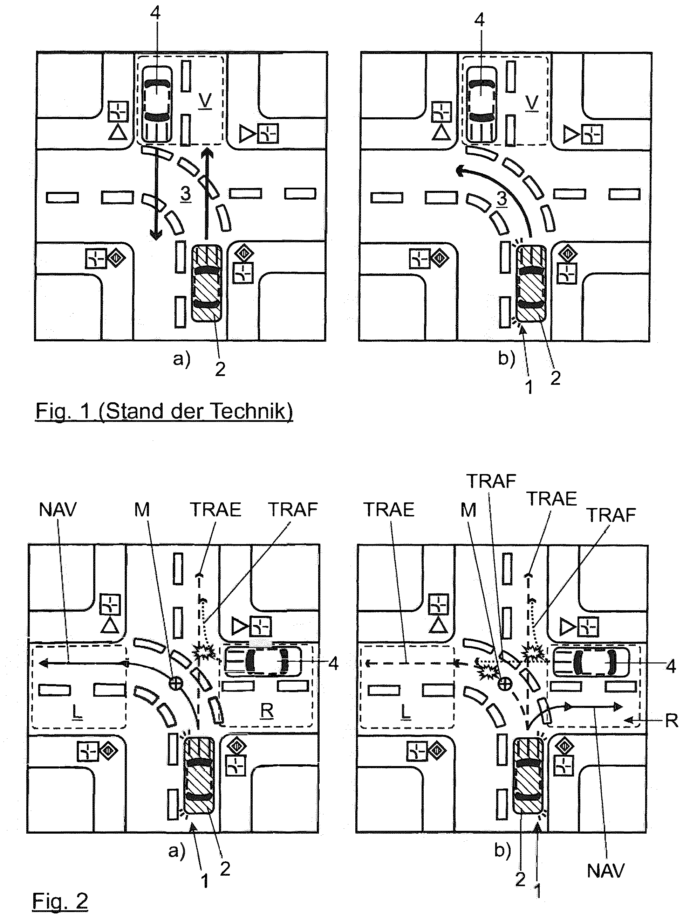

Figur 1 zeigt eine Draufsicht auf eine Kreuzung 3 in zwei Verkehrssituationen, welche durch die Buchstaben a) und b) veranschaulicht werden. In der Darstellung fährt ein Ego-Fahrzeug 2 auf die Kreuzung 3 zu, wobei in der Situation a) das Ego-Fahrzeug 2 geradeaus über die Kreuzung 3 fährt und in der Situation b) nach links abbiegt, um der abknickenden Vorfahrtsstraße zu folgen.

Ein regelkonformes Fahrverhalten sieht vor, dass in der Situation a) ein Fahrtrichtungsanzeiger 1, beispielsweise ein Blinker des Ego-Fahrzeugs 2, nicht betätigt wird, um eine Geradeausfahrt anzuzeigen. Entsprechend muss in der Fahrsituation b) der Fahrtrichtungsanzeiger 1 des Ego-Fahrzeugs 2 so betätigt werden, dass der Abbiegevorgang nach links angezeigt wird. Es muss also der linke Blinker des Ego-Fahrzeugs 2 aktiviert werden.

Anhand von Figur 1 wird die Bedeutung eines korrekten Betätigens des Fahrtrichtungsanzeigers 1 ersichtlich. Handelt es sich um die in Figur 1b) gezeigte Fahrsituation und würde hingegen der Fahrtrichtungsanzeiger 1 des Ego-Fahrzeugs 2 nicht betätigt werden, so könnte ein dem Ego-Fahrzeug 2 aus einem vorwärtigen Straßenzug V entgegenkommendes Fremdfahrzeug 4 fälschlicherweise davon ausgehen, dass das Ego-Fahrzeug 2 ebenfalls geradeaus über die Kreuzung 3 fahren möchte. In diesem Falle könnte das Fremdfahrzeug 4 anfahren, da kein Unfall droht. Da jedoch das Ego-Fahrzeug 2 nach links abbiegt, könnten das Ego-Fahrzeug 2 und das Fremdfahrzeug 4 zusammenstoßen.

Mit Hilfe aus dem Stand der Technik bekannter Fahrerassistenzsysteme bzw. Verfahren zum Ansteuern von Fahrtrichtungsanzeigern 1 ist es möglich eine Navigationsroute des Ego-Fahrzeugs 2 zu analysieren und dadurch zu erkennen, welchen Pfad das Ego-Fahrzeug 2 im Bereich einer Kreuzung 3 mit abknickender Vorfahrt wahrscheinlich wählen wird. Entsprechend kann der Fahrtrichtungsanzeiger 1 automatisch betätigt werden.

Die Anmelderin hat jedoch erkannt, dass Verkehrssituationen entstehen können, bei denen ein solches automatisches Betätigen des Fahrtrichtungsanzeigers 1 erst zu einem Unfallpotenzial führt. Hier setzt ein erfindungsgemäßes Verfahren zum automatischen Ansteuern des Fahrtrichtungsanzeigers 1 an, um solche Unfälle zu vermeiden.

Die entsprechenden Verkehrssituationen werden anhand der folgenden Figuren erläutert. So zeigt Figur 2 eine Draufsicht auf eine Kreuzung 3 mit einer aus Sicht des Ego-Fahrzeugs 2 nach links abknickenden Vorfahrt. Dabei zeigt Figur 2a) den Fall, dass eine Navigationsroute NAV des Ego-Fahrzeugs 2 der abknickenden Vorfahrt folgt und Figur 2b) zeigt den Fall, dass die Navigationsroute NAV hingegen nach rechts abbiegt.

Es besteht die Möglichkeit, dass die fahrzeugführende Person des Ego-Fahrzeugs 2 der Navigationsroute NAV nicht folgen möchte, beispielsweise weil die fahrzeugführende Person aufgrund von Ortskenntnis weiß, dass eine entsprechende andere Route eine Abkürzung darstellt, oder weil ein abseits der Navigationsroute NAV liegender Zwischenstopp eingelegt werden soll. Das Ego-Fahrzeug 2 könnte also den durch eine gestrichelte Linie angedeuteten Fahrweg bzw. eine entsprechende Trajektorie TRAE wählen.

Möchte ebenfalls ein Fremdfahrzeug 4 aus einem aus Sicht des Ego-Fahrzeugs 2 rechten Straßenzug R in die Kreuzung 3 einfahren, so könnte ein Unfall drohen. Wird nämlich der Fahrtrichtungsanzeiger 1 in Abhängigkeit der Navigationsroute NAV automatisch aktiviert, so würde in Figur 2a) der Blinker des Ego-Fahrzeugs 2 nach links blinken und in Figur 2b) nach rechts. Entsprechend würde die fahrzeugführende Person des Fremdfahrzeugs 4 davon ausgehen, dass das Ego-Fahrzeug 2 der jeweiligen Navigationsroute NAV folgt. In Figur 2a) könnten die beiden Fahrzeuge 2, 4 voreinander abbiegen, was ein schnelles und gleichzeitig sicheres Passieren der Kreuzung 3 durch die beiden Fahrzeuge 2 und 4 ermöglichen würde. In Figur 2b) könnte das Fremdfahrzeug 4 einfach losfahren, da das Ego-Fahrzeug 2 eine Trajektorie TRAF des Fremdfahrzeugs 4 nicht schneiden würde.

Folgt hingegen das Ego-Fahrzeug 2 der tatsächlichen Trajektorie TRAE anstatt der Navigationsroute NAV, so droht hingegen ein Unfall mit dem Fremdfahrzeug 4, angedeutet durch einen zackigen Umriss.

Das erfindungsgemäße Verfahren sieht hingegen vor, dass das Ego-Fahrzeug 2 sein Umfeld mit Hilfe einer Umfeldsensorik überwacht, wodurch das Fremdfahrzeug 4 im rechten Straßenzug R detektiert wird. In diesem Falle wird das automatische Betätigen des Fahrtrichtungsanzeigers 1 unterbunden, um die fahrzeugführende Person des Fremdfahrzeugs 4 nicht dazu zu veranlassen anzufahren. So droht auch kein Unfall, wenn das Ego-Fahrzeug 2 anstelle der Navigationsroute NAV der Trajektorie TRAE folgt.

Möchte dennoch die fahrzeugführende Person des Ego-Fahrzeugs 2 der Navigationsroute NAV folgen, so kann die fahrzeugführende Person den Blinker auch manuell aktivieren, was den Steuerbefehl einer Recheneinheit des Ego-Fahrzeugs 2 zum Verhindern der automatischen Aktivierung des Fahrtrichtungsanzeigers 1 überschreibt. Ebenfalls kann der Blinker des Ego-Fahrzeugs 2 automatisch aktiviert werden, wenn das Ego-Fahrzeug 2 erkennt, dass ein Mittelpunkt M der Kreuzung 3 passiert wurde. Hierzu muss das Ego-Fahrzeug 2 nicht unmittelbar über den Mittelpunkt M gefahren sein, sondern lediglich der entsprechende Abschnitt der Navigationsroute NAV, der dem Mittelpunkt M am nächsten ist, passiert worden sein. Ebenfalls kann eine Blickrichtung der fahrzeugführenden Person des Ego-Fahrzeugs 2 nachverfolgt werden, wodurch die Recheneinheit des Ego-Fahrzeugs 2 den Blinker automatisch aktivieren kann, wenn die fahrzeugführende Person ihren Blick in den entsprechenden rechten Straßenzug R bzw. einen aus Sicht des Ego-Fahrzeugs 2 linken Straßenzug L hineinwirft.

Ebenfalls droht in Figur 2b) ein Unfall, wenn ein Fremdfahrzeug aus dem vorwärtigen Straßenzug V in die Kreuzung 3 einfahren möchte (nicht dargestellt), wenn das Ego-Fahrzeug 2 tatsächlich nach links abbiegen wird. Mit Hilfe des erfindungsgemäßen Verfahrens lässt sich auch ein solcher potentieller Unfall vermeiden.

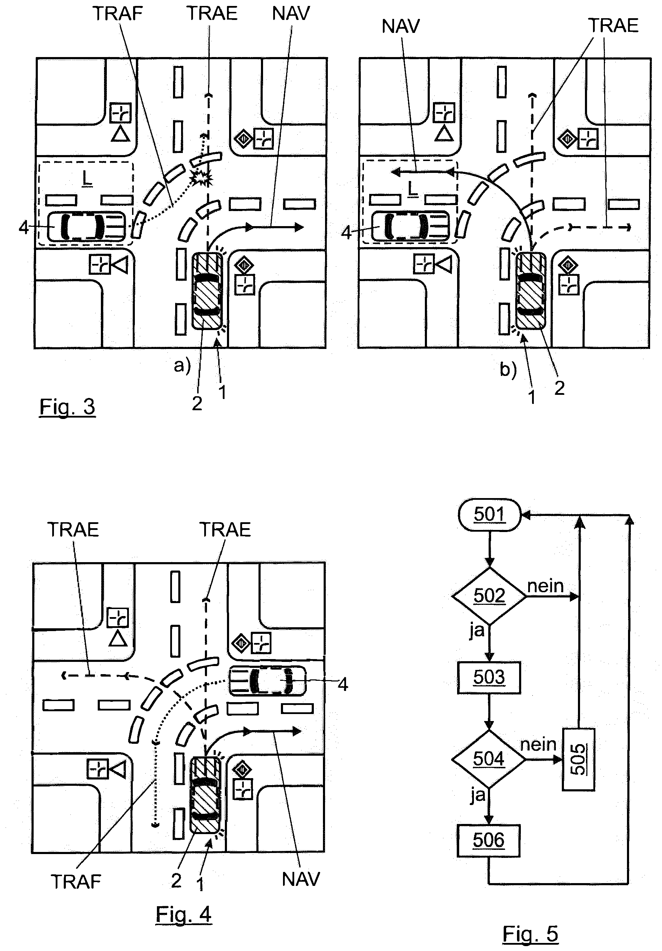

Figur 3 zeigt eine analoge Verkehrssituation für eine Kreuzung 3 mit einer nach rechts abknickenden Vorfahrt. Auch hier zeigt die durch das Bezugszeichen a) angedeutete Verkehrssituation den Fall, dass die Navigationsroute NAV der abknickenden Vorfahrt folgt und die Verkehrssituation b) die Situation, in der die Navigationsroute NAV in den der abknickenden Vorfahrt gegenüberliegenden Straßenzug mündet. Befindet sich in Figur 3a) ein Fremdfahrzeug 4 im linken Straßenzug L, so könnte dieses dazu veranlasst werden, in die Kreuzung 3 einzufahren, wenn das Ego-Fahrzeug 2 zum Folgen einer Navigationsroute NAV automatisch nach rechts blinkt. Fährt das Ego-Fahrzeug 2 jedoch entlang der Trajektorie TRAE, so droht auch hier ein Unfall. Das erfindungsgemäße Verfahren lässt sich auf die in Figur 3a) gezeigte Verkehrssituation übertragen, sodass auch hier das automatische Aktivieren des Fahrtrichtungsanzeigers 1 unterbunden werden kann. So lässt sich auch hier das Unfallpotenzial senken.

Ebenfalls droht in Figur 3a) ein Unfall, wenn ein Fremdfahrzeug aus dem vorwärtigen Straßenzug V in die Kreuzung 3 einfahren möchte (nicht dargestellt), wenn das Ego-Fahrzeug 2 tatsächlich nach links abbiegen wird. Mit Hilfe des erfindungsgemäßen Verfahrens lässt sich auch ein solcher potentieller Unfall vermeiden.

In Figur 3b) droht hingegen kein Unfall, da das Fremdfahrzeug 4 in jedem Falle Vorfahrt dem Ego-Fahrzeug 2 einräumen muss. So kann die in Figur 3b) gezeigte Verkehrssituation von der Durchführung des erfindungsgemäßen Verfahrens auch ausgespart werden. So kann auch bei Erkennen des Fremdfahrzeugs 4 im linken Straßenzug L gefahrlos automatisch der Fahrtrichtungsanzeiger 1 zum nach links blinken aktiviert werden, auch wenn das Ego-Fahrzeug 2 tatsächlich der Trajektorie TRAE folgen würde. Entsprechend ist die Recheneinheit des Ego-Fahrzeugs dazu eingerichtet eine jeweilige Verkehrssituation zu erkennen.

Figur 4 zeigt eine weitere Verkehrssituation, bei der durch das automatische Betätigen des Fahrtrichtungsanzeigers 1 keine Gefahr droht. So müsste nämlich hier das Ego-Fahrzeug 2 dem Fremdfahrzeug 4 Vorfahrt einräumen, bevor eine der Trajektorien TRAE befahren wird. Entsprechend droht auch kein Unfall durch das automatische betätigen des Fahrtrichtungsanzeigers 1, da die fahrzeugführende Person des Ego-Fahrzeugs 2 erst anhalten und das Fremdfahrzeug 4 passieren lassen muss.

Figur 5 zeigt ein Ablaufdiagramm des erfindungsgemäßen Verfahrens.

In einem Verfahrensschritt 501 wird eine Navigationsführung für das Ego-Fahrzeug 2 unter Verwendung einer Navigationseinheit gestartet. Die Navigationseinheit ermittelt dann besagte Navigationsroute NAV.

In einem Verfahrensschritt 502 überprüft die Recheneinheit des Ego-Fahrzeugs 2, ob ein Abbiegevorgang an einer abknickenden Vorfahrtsstraße vorgesehen ist. Wird die entsprechende Kreuzung 3 erreicht, so wird im Verfahrensschritt 503 eine Überwachung des Umfelds des Ego-Fahrzeugs 2 mittels einer Umfeldsensorik durchgeführt. Die Recheneinheit prüft dann in einem Verfahrensschritt 504, ob ein Fremdfahrzeug 4 im jeweiligen einer abknickenden Vorfahrtsstraße gegenüberliegenden Straßenzug auffindbar ist. Kann kein Fremdfahrzeug 4 aufgefunden werden, so kann in einem Verfahrensschritt 505 der Fahrtrichtungsanzeiger 1 automatisch aktiviert werden. Wird hingegen ein entsprechendes Fremdfahrzeug 4 erkannt, so wird in einem Verfahrensschritt 506 das automatische Betätigen des Fahrtrichtungsanzeigers 1 unterlassen.

Die Existenz weiterer Fahrzeuge im Bereich der Kreuzung 3 beeinflusst dabei nicht die Durchführung des erfindungsgemäßen Verfahrens.

## Patentansprüche

1. Verfahren zum automatischen Ansteuern eines Fahrtrichtungsanzeigers (1) eines Ego-Fahrzeugs (2) im Rechtsverkehr, wobei das Ego-Fahrzeug (2) mittels einer Umfeldsensorik sein Umfeld überwacht sowie mittels einer Navigationseinheit seinen aktuellen Aufenthaltsort bestimmt und von der Umfeldsensorik erzeugte Sensordaten sowie der von der Navigationseinheit bestimmte Aufenthaltsort von einer Recheneinheit verarbeitet werden, woraufhin die Recheneinheit den Fahrtrichtungsanzeiger (1) in Abhängigkeit aus der Verarbeitung der Sensordaten gewonnener Informationen und eines Abgleichs des Aufenthaltsorts mit einer digitalen Straßenkarte ansteuert, wobei ferner die Recheneinheit dazu ausgebildet ist, eine Annäherung des Ego-Fahrzeugs (2) an eine Kreuzung (3) mit einer abknickenden Vorfahrt zu erkennen und den Fahrtrichtungsanzeiger (1) beim Annähern an die Kreuzung (3) automatisch zu aktivieren, wenn eine von der Navigationseinheit genutzte Navigationsroute (NAV) das Durchführen eines Abbiegevorgangs an der Kreuzung (3) vorsieht, **dadurch gekennzeichnet, dass**, wenn die Recheneinheit einen Aufenthalt des Ego-Fahrzeugs (2) auf einem Vorfahrtspfad erkennt, die Recheneinheit die Sensordaten dahingehend überprüft, ob:
- bei einer nach rechts abknickenden Vorfahrt in einem aus Sicht des Ego-Fahrzeugs (2) linken in die Kreuzung (3) einmündenden Straßenzug (L) oder in einem dem Ego-Fahrzeug (2) gegenüberliegenden vorwärtigen Straßenzug (V) ein Fremdfahrzeug (4) erkennbar ist, wenn die Navigationsroute (NAV) des Ego-Fahrzeugs (2) der abknickenden Vorfahrtsstraße nach rechts folgt; oder
- bei einer nach links abknickenden Vorfahrt in einem aus Sicht des Ego-Fahrzeugs (2) rechten in die Kreuzung (3) einmündenden Straßenzug (R) ein Fremdfahrzeug (4) erkennbar ist, wenn die Navigationsroute (NAV) des Ego-Fahrzeugs (2) der abknickenden Vorfahrtstraße nach links folgt; oder
- bei einer nach links abknickenden Vorfahrt in einem aus Sicht des Ego-Fahrzeugs (2) rechten in die Kreuzung (3) einmündenden Straßenzug (R) oder im vorwärtigen Straßenzug (V) ein Fremdfahrzeug (4) erkennbar ist, wenn die Navigationsroute (NAV) des Ego-Fahrzeugs (2) von der abknickenden Vorfahrtstraße nach rechts herunter führt;
- woraufhin die Recheneinheit den Fahrtrichtungsanzeiger (1) ansteuert, um:
- den Fahrtrichtungsanzeiger (1) zu aktivieren, wenn die Recheneinheit bei der Prüfung der Sensordaten kein Fremdfahrzeug (4) im jeweiligen Straßenzug (L, R, V) erkennt; oder
- eine Aktivierung des Fahrtrichtungsanzeigers (1) zu verhindern, wenn die Recheneinheit bei der Prüfung der Sensordaten wenigstens ein Fremdfahrzeug (4) im jeweiligen Straßenzug (L, R, V) erkennt.

2. Verfahren nach Anspruch 1,
**dadurch gekennzeichnet, dass**
ein durch die Recheneinheit ausgegebenes Steuersignal zum Ansteuern des Fahrtrichtungsanzeigers (1) durch das manuelle Betätigen eines Fahrtrichtungsanzeiger-Bedienelements überschrieben wird.

3. Verfahren nach Anspruch 1 oder 2,
**dadurch gekennzeichnet, dass**
die Recheneinheit den Fahrtrichtungsanzeiger (1) beim Überschreiten des Mittelpunkts (M) der Kreuzung (3) ansteuert, um:
- einen inaktiven Fahrtrichtungsanzeiger (1) zu aktivieren, wenn die Recheneinheit einen Abbiegevorgang des Ego-Fahrzeugs (2) von der Kreuzung (3) erkennt; oder
- einen aktiven Fahrtrichtungsanzeiger (1) zu deaktivieren, wenn die Recheneinheit eine Geradeausfahrt des Ego-Fahrzeugs (2) durch die Kreuzung (3) erkennt.

4. Verfahren nach einem der Ansprüche 1 bis 3,
**dadurch gekennzeichnet, dass**
die Recheneinheit mit Hilfe wenigstens eines Fahrzeuginnenraumsensors eine Blickrichtung einer fahrzeugführenden Person des Ego-Fahrzeugs (2) erfasst und die Recheneinheit den Fahrtrichtungsanzeiger (1) ansteuert, wobei ein vormalig durch die Recheneinheit ausgegebenes Steuersignal überschrieben wird, um:
- einen inaktiven Fahrtrichtungsanzeiger (1) zu aktivieren, wenn die Recheneinheit erkennt, dass die Blickrichtung beim Einfahren des Ego-Fahrzeugs (2) in die Kreuzung (3) auf den linken Straßenzug (L) oder auf den rechten Straßenzug (R) gerichtet ist; oder
- einen aktiven Fahrtrichtungsanzeiger (1) zu deaktivieren, wenn die Recheneinheit erkennt, dass die Blickrichtung beim Einfahren des Ego-Fahrzeugs (2) in die Kreuzung (3) geradeaus, auf einen aus Sicht des Ego-Fahrzeugs (2) vorwärtigen Straßenzug (V) gerichtet ist.

5. Fahrzeug mit einem Fahrtrichtungsanzeiger (1), einer Umfeldsensorik, einer Navigationseinheit und einer Recheneinheit,
**dadurch gekennzeichnet, dass**
der Fahrtrichtungsanzeiger (1), die Umfeldsensorik, die Navigationseinheit und die Recheneinheit zur Ausführung eines Verfahrens nach einem der Ansprüche 1 bis 4 eingerichtet sind.

## Claims

1. Method for automatically actuating a direction indicator (1) of an ego vehicle (2) in right-hand traffic, the ego vehicle (2) monitoring its surroundings by means of an surroundings sensor system and determining its current location by means of a navigation unit, and sensor data generated by the surroundings sensor system and the location determined by the navigation unit being processed by a computing unit, after which the computing unit actuates the direction indicator (1) depending on information obtained from processing the sensor data and a comparison of the location with a digital road map, the computing unit being further designed to detect the ego vehicle (2) approaching an intersection (3) having a turning priority and to automatically activate the direction indicator (1) when approaching the intersection (3) if a navigation route (NAV) used by the navigation unit stipulates carrying out a turning maneuver at the intersection (3),
**characterized in that**
if the computing unit detects that the ego vehicle (2) is located on a priority path, the computing unit checks the sensor data to determine whether:
- in the case of a turning priority to the right in a street (L) leading into the intersection (3) on the left when viewed from the ego vehicle (2) or in a street (V) in front opposite the ego vehicle (2), another vehicle (4) is visible if the navigation route (NAV) of the ego vehicle (2) follows the turning priority road to the right; or
- in the case of a turning priority to the left in a street (R) leading into the intersection (3) on the right when viewed from the ego vehicle (2), another vehicle (4) is visible if the navigation route (NAV) of the ego vehicle (2) follows the turning priority road to the left; or
- in the case of a turning priority to the left in a street (R) leading into the intersection (3) on the right when viewed from the ego vehicle (2) or in the road (V) in front, another vehicle (4) is visible if the navigation route (NAV) of the ego vehicle (2) leads down to the right from the turning priority road;
- after which the computing unit actuates the direction indicator (1) in order to:
- activate the direction indicator (1) if the computing unit does not detect any other vehicle (4) in the relevant street (L, R, V) when checking the sensor data; or
- prevent activation of the direction indicator (1) if the computing unit detects at least one other vehicle (4) in the relevant street (L, R, V) when checking the sensor data.

2. Method according to claim 1,
**characterized in that**
a control signal output by the computing unit for actuating the direction indicator (1) is overwritten by manual actuation of a direction indicator operating element.

3. Method according to either claim 1 or claim 2,
**characterized in that**
the computing unit actuates the direction indicator (1) when the center point (M) of the intersection (3) is crossed in order to:
- activate an inactive direction indicator (1) if the computing unit detects a turning maneuver of the ego vehicle (2) from the intersection (3); or
- deactivate an active direction indicator (1) if the computing unit detects that the ego vehicle (2) is driving straight through the intersection (3).

4. Method according to any of claims 1 to 3,
**characterized in that**
the computing unit establishes a line of sight of a person driving the ego vehicle (2) by means of at least one vehicle interior sensor and the computing unit actuates the direction indicator (1), a control signal previously output by the computing unit being overwritten in order to:
- activate an inactive direction indicator (1) if the computing unit detects that the line of sight is directed toward the left-hand street (L) or the right-hand street (R) when the ego vehicle (2) enters the intersection (3); or
- deactivate an active direction indicator (1) if the computing unit detects that the line of sight is directed straight ahead toward a street (V) in front when viewed from the ego vehicle (2) when the ego vehicle (2) enters the intersection (3).

5. Vehicle having a direction indicator (1), a surroundings sensor system, a navigation unit and a computing unit,
**characterized in that**
the direction indicator (1), the surroundings sensor system, the navigation unit and the computing unit are configured to execute a method according to any of claims 1 to 4.

## Revendications

1. Procédé pour la commande automatique d'un indicateur de direction (1) d'un égo-véhicule (2) en circulation à droite, dans lequel l'égo-véhicule (2) surveille son environnement au moyen d'un système de capteurs d'environnement et détermine son emplacement actuel au moyen d'une unité de navigation, et des données de capteurs générées par le système de capteurs d'environnement ainsi que l'emplacement déterminé par l'unité de navigation sont traités par une unité de calcul, après quoi l'unité de calcul commande l'indicateur de direction (1) en fonction des informations obtenues par le traitement des données de capteurs et d'une comparaison de l'emplacement avec une carte routière numérique, dans lequel l'unité de calcul est en outre configurée pour détecter une approche de l'égo-véhicule (2) d'un croisement (3) comportant une priorité en courbe et pour activer automatiquement l'indicateur de direction (1) à l'approche du croisement (3) lorsqu'un itinéraire de navigation (NAV) utilisé par l'unité de navigation prévoit l'exécution d'un processus de virage au croisement (3),
**caractérisé en ce que**
lorsque l'unité de calcul détecte un emplacement de l'égo-véhicule (2) sur une voie prioritaire, l'unité de calcul vérifie les données de capteurs pour savoir si :
- dans le cas d'une priorité vers la droite, un véhicule tiers (4) est détectable dans une voie (L) débouchant, du point de vue de l'égo-véhicule (2), à gauche dans le croisement (3) ou dans une voie (V) située devant l'égo-véhicule (2) et faisant face à celui-ci, lorsque l'itinéraire de navigation (NAV) de l'égo-véhicule (2) suit la route prioritaire courbée vers la droite ; ou
- dans le cas d'une priorité vers la gauche, un véhicule tiers (4) est détectable dans une voie (R) débouchant, du point de vue de l'égo-véhicule (2), à droite dans le croisement (3) lorsque l'itinéraire de navigation (NAV) de l'égo-véhicule (2) suit la route prioritaire courbée vers la gauche ; ou
- dans le cas d'une priorité vers la gauche, un véhicule tiers (4) est détectable dans une voie (R) débouchant, du point de vue de l'égo-véhicule (2), à droite dans le croisement (3) ou dans la voie (V) située devant, lorsque l'itinéraire de navigation (NAV) de l'égo-véhicule (2) mène vers la droite à partir de la route prioritaire courbée ;
- après quoi l'unité de calcul commande l'indicateur de direction (1) pour :
- activer l'indicateur de direction (1) lorsque l'unité de calcul ne détecte aucun véhicule tiers (4) dans la voie (L, R, V) respective lors de l'analyse des données de capteurs ; ou
- empêcher une activation de l'indicateur de direction (1) lorsque l'unité de calcul détecte au moins un véhicule tiers (4) dans la voie (L, R, V) respective lors de l'analyse des données de capteurs.

2. Procédé selon la revendication 1,
**caractérisé en ce que**
un signal de commande émis par l'unité de calcul pour la commande de l'indicateur de direction (1) est écrasé par l'actionnement manuel d'un élément de manipulation d'indicateur de direction.

3. Procédé selon la revendication 1 ou 2,
**caractérisé en ce que**
l'unité de calcul commande l'indicateur de direction (1) lors du dépassement du point central (M) du croisement (3) pour :
- activer un indicateur de direction (1) inactif lorsque l'unité de calcul détecte un processus de virage de l'égo-véhicule (2) à partir du croisement (3) ; ou
- désactiver un indicateur de direction (1) actif lorsque l'unité de calcul détecte une sortie en ligne droite de l'égo-véhicule (2) à travers le croisement (3).

4. Procédé selon l'une des revendications 1 à 3,
**caractérisé en ce que**
l'unité de calcul détecte, à l'aide d'au moins un capteur d'habitacle de véhicule, une direction de regard d'une personne conduisant l'égo-véhicule (2) et l'unité de calcul commande l'indicateur de direction (1), dans lequel un signal de commande émis auparavant par l'unité de calcul est écrasé pour :
- activer un indicateur de direction (1) inactif lorsque l'unité de calcul détecte que la direction de regard est dirigée vers la voie (L) de gauche ou vers la voie (R) de droite lorsque l'égo-véhicule (2) s'engage dans le croisement (3) ; ou
- désactiver un indicateur de direction (1) actif lorsque l'unité de calcul détecte que la direction de regard est dirigée tout droit, vers une voie (V) située devant, du point de vue de l'égo-véhicule (2), lorsque l'égo-véhicule (2) s'engage dans le croisement (3).

5. Véhicule comportant un indicateur de direction (1), un système de capteurs d'environnement, une unité de navigation et une unité de calcul,
**caractérisé en ce que**
l'indicateur de direction (1), le système de capteurs d'environnement, l'unité de navigation et l'unité de calcul sont configurés pour mettre en oeuvre un procédé selon l'une des revendications 1 à 4.
